(19) Europäisches Patentamt
European Patent Office
Office européen des brevets

(11) EP 3 476 872 B1

(12) EUROPEAN PATENT SPECIFICATION

(45) Date of publication and mention of the grant of the patent:
**19.05.2021 Bulletin 2021/20**

(21) Application number: **17815308.6**

(22) Date of filing: **16.06.2017**

(51) Int Cl.:
***C08F 214/26*** (2006.01) ***C08J 5/22*** (2006.01)
***H01B 1/06*** (2006.01) ***H01M 8/1023*** (2016.01)
***H01M 8/1039*** (2016.01) ***H01M 8/1067*** (2016.01)
***H01M 8/1088*** (2016.01) *H01M 8/1018* (2016.01)

(86) International application number:
**PCT/JP2017/022376**

(87) International publication number:
**WO 2017/221840 (28.12.2017 Gazette 2017/52)**

# (54) ELECTROLYTE MATERIAL, METHOD FOR PRODUCING SAME, AND USE OF SAME

ELEKTROLYTMATERIAL, VERFAHREN ZUR HERSTELLUNG DAVON UND VERWENDUNG DAVON

MATÉRIAU D'ÉLECTROLYTE, SON PROCÉDÉ DE PRODUCTION ET SON UTILISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.06.2016 JP 2016123915**
**29.06.2016 JP 2016129273**

(43) Date of publication of application:
**01.05.2019 Bulletin 2019/18**

(73) Proprietor: **AGC Inc.**
**Chiyoda-ku**
**Tokyo 100-8405 (JP)**

(72) Inventors:
- **SAITO Susumu**
  **Tokyo 100-8405 (JP)**
- **HOMMURA Satoru**
  **Tokyo 100-8405 (JP)**
- **HIRAI Takeshi**
  **Tokyo 100-8405 (JP)**

(74) Representative: **Müller-Boré & Partner Patentanwälte PartG mbB**
**Friedenheimer Brücke 21**
**80639 München (DE)**

(56) References cited:
**WO-A1-2007/013533** **JP-A- H06 342 665**
**US-A1- 2008 138 685** **US-A1- 2009 004 527**
**US-A1- 2010 009 236**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to an electrolyte material and its production method, a liquid composition and a polymer electrolyte membrane, comprising the electrolyte material, a membrane/electrode assembly comprising the polymer electrolyte membrane, a polymer electrolyte fuel cell comprising the membrane/electrode assembly, and a precursor of the electrolyte material and it production method.

A polymer electrolyte fuel cell is, for example, one wherein a membrane electrode assembly is sandwiched between two separators to form a cell, and a plurality of such cells are stacked. The membrane electrode assembly is one comprising an anode and a cathode each having a catalyst layer, and a polymer electrolyte membrane disposed between the anode and the cathode. The polymer electrolyte membrane is one having an electrolyte membrane formed of a fluorinated polymer having ion exchange groups formed into a membrane-shape.

The reaction in the polymer electrolyte fuel cell is represented by the following formula.

Anode:

$$H_2 \rightarrow 2H^+ + 2e^-$$

Cathode:

$$2H^+ + 1/2O_2 + 2e^- \rightarrow H_2O$$

Accordingly, the polymer electrolyte membrane is required to conduct proton ($H^+$).

As an electrolyte material which has favorable proton conductivity even under low humidity, the following has been proposed.

(1) An electrolyte material which has units ($\alpha$) represented by $CF_2=CF(CF_2)_k-O_l-(CF_2CFY^1-O)_n-(CFY^2)_m-A^1$ ($Y^1$: F, Cl or a perfluoroalkyl group, k: 0 to 2, l: 0 or 1, n: 0 to 8, $Y^2$: F or Cl, m: 0 to 6, $A^1$: COOZ or $SO_3Z$, Z: a hydrogen atom, an alkali metal, or the like) and units ($\beta$) based on an ethylenic fluoromonomer, which has an equivalent weight of from 250 to 700 g/eq, which has a proton conductivity at a temperature of 110°C under a relative humidity of 50%RH of at least 0.10 S/cm, and an ion cluster distance of from 0.1 to 2.6 nm (Patent Document 1).

In the electrolyte material (1), in order that the proton conductivity is sufficiently high, it is necessary to increase the units ($\alpha$) having an ion exchange group, that is, to sufficiently lower the equivalent weight. However, if the units ($\alpha$) are increased, the resulting electrolyte material will be highly soluble in water. In power generation in a polymer electrolyte fuel cell, the polymer electrolyte membrane is exposed to high temperature and high humidity conditions, and thus the polymer electrolyte membrane is required to have hot water resistance.

As an electrolyte material having hot water resistance, the following has been proposed.

(2) An electrolyte material produced by hydrolyzing a precursor composed of a polymer of $CF_2=CF_2$ and $CF_2=CFO(CF_2)_2-SO_2F$, which satisfies $\log_{10}MI \leqq [(EW-850)/90]+3$, which has an equivalent weight (EW) of from 250 to 861 g/eq and which has MI (g/10 min) of at most 3.8, wherein the mass reduction by a boiling treatment in water for 8 hours is at most 5 mass% based on the dry mass before the boiling treatment (Patent Document 2).

Patent Document 1: Japanese Patent No. 5474762
Patent Document 2: Japanese Patent No. 4067315

Furthermore, US 2008/138685 A1 describes an electrolyte material for polymer electrolyte fuel cells, an electrolyte membrane, and a membrane/electrode assembly.

Moreover, US 2010/009236 A1 describes a polymer electrolyte membrane for polymer electrolyte fuel cells, and a membrane/electrode assembly.

With respect to the electrolyte material (2) also, it is required to increase the units having ion exchange groups, that is, to sufficiently lower the equivalent weight, in order that the proton conductivity is sufficiently high. However, if the units based on $CF_2=CFO(CF_2)_2-SO_3H$ are increased too much, the resulting electrolyte material will be highly soluble in water.

Accordingly, the electrolyte material is required to have sufficiently high proton conductivity without having too low equivalent weight.

The present invention provides an electrolyte material having a high proton conductivity and being excellent in hot water resistance and its production method; a liquid composition capable of forming a membrane having a high proton conductivity and being excellent in hot water resistance; a polymer electrolyte membrane having a high proton

conductivity and being excellent in hot water resistance; a membrane/electrode assembly and a polymer electrolyte fuel cell, comprising a polymer electrolyte membrane having a high proton conductivity and being excellent in hot water resistance; and a precursor from which an electrolyte material having a high proton conductivity and being excellent in hot water resistance can be obtained, and its production method.

The present invention provides the following.

<1> An electrolyte material which is formed of a polymer H having units represented by the following formula u1 and units based on tetrafluoroethylene,
wherein the proportion of the units u1 in the polymer H is from 18.1 to 29.9 mol% to all the units contained in the polymer H,
wherein the polymer H has EW represented by the following formula I of from 400 to 550 g/eq, and
the mass reduction ratio when immersed in hot water at 120°C for 24 hours is at most 15 mass%:

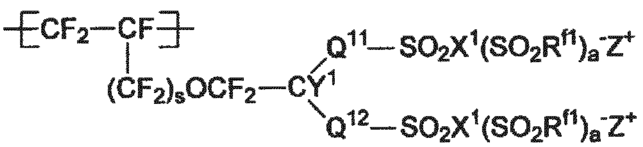

(u1)

wherein

$Q^{11}$ is a perfluoroalkylene group which may have an etheric oxygen atom,
$Q^{12}$ is a single bond or a perfluoroalkylene group which may have an etheric oxygen atom,
$Y^1$ is a fluorine atom or a monovalent perfluoroorganic group,
s is 0 or 1,
$R^{f1}$ is a perfluoroalkyl group which may have an etheric oxygen atom,
$X^1$ is an oxygen atom, a nitrogen atom or a carbon atom,
a is 0 when $X^1$ is an oxygen atom, 1 when $X^1$ is a nitrogen atom, and 2 when $X^1$ is a carbon atom, and
$Z^+$ is $H^+$, a monovalent metal ion or an ammonium ion in which at least one hydrogen atom may be substituted with a hydrocarbon group;

$$EW=1000/AR \quad (I)$$

wherein EW is the equivalent weight (number of g of the polymer per 1 equivalent amount of ion exchange groups), and AR is the ion exchange capacity (milliequivalent of ion exchange groups per 1 g of the polymer).

<2> The electrolyte material according to <1>, wherein the proton conductivity at a temperature of 80°C under a relative humidity of 50%RH is at least 0.15 S/cm.
<3> The electrolyte material according to <1> or <2>, wherein $Q^{11}$ is a perfluoroalkylene group having an etheric oxygen atom, and $Q^{12}$ is a perfluoroalkylene group having an etheric oxygen atom.
<4> The electrolyte material according to any one of <1> to <3>, wherein the polymer H has no unit having only one ion exchange group.
<5> A liquid composition comprising the electrolyte material as defined in any one of the above <1> to <4>, and a dispersion medium.
<6> A polymer electrolyte membrane comprising the electrolyte material as defined in any one of the above <1 > to <4>.
<7> A membrane/electrode assembly, comprising an anode having a catalyst layer, a cathode having a catalyst layer, and the polymer electrolyte membrane as defined in <6> disposed between the anode and the cathode.
<8> A polymer electrolyte fuel cell, comprising the membrane/electrode assembly as defined in the above <7>.
<9> A precursor of the electrolyte material as defined in any one of the above <1> to <4>, which is formed of a polymer F having units represented by the following formula u'1 and units based on tetrafluoroethylene:

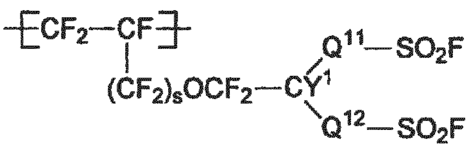

(u'1)

wherein $Q^{11}$, $Q^{12}$, $Y^1$ and s correspond to $Q^{11}$, $Q^{12}$, $Y^1$ and s as defined in any one of <1> to <4>.
<10> The precursor according to <9>, wherein the polymer F has the following TQ of from 220 to 300°C:
TQ: a temperature at which the extrusion amount becomes 100 $mm^3$/sec, when the polymer F is melted and the molten polymer F is extruded from a nozzle having a length of 1 mm and an inner diameter of 1 mm, under 2.94 MPa.
<11> A method for producing the precursor as defined in the above <9> or <10>, which comprises polymerizing a monomer component containing a compound represented by the following formula m1 and tetrafluoroethylene by solution polymerization method to obtain the polymer F:

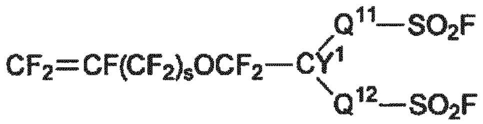

(m1)

wherein $Q^{11}$, $Q^{12}$, $Y^1$ and s correspond to $Q^{11}$, $Q^{12}$, $Y^1$ and s as defined in the above <9> or <10>.
<12> A method for producing the electrolyte material as defined in any one of the above <1> to <4>, which comprises obtaining the polymer F by the method as defined in <11>, and converting $-SO_2F$ groups of the obtained polymer F into ion exchange groups to obtain the polymer H.

The electrolyte material of the present invention has a high proton conductivity and is excellent in hot water resistance.
According to the method for producing an electrolyte material of the present invention, it is possible to produce an electrolyte material having a high proton conductivity and being excellent in hot water resistance.
According to the liquid composition of the present invention, it is possible to form a membrane having a high proton conductivity and being excellent in hot water resistance.
The polymer electrolyte membrane of the present invention has a high proton conductivity and is excellent in hot water resistance.
The membrane/electrode assembly of the present invention comprises a polymer electrolyte membrane having a high proton conductivity and being excellent in hot water resistance.
The polymer electrolyte fuel cell of the present invention comprises a polymer electrolyte membrane having a high proton conductivity and being excellent in hot water resistance.
Accordingly to the precursor of the present invention, it is possible to obtain an electrolyte material having a high proton conductivity and being excellent in hot water resistance.
According to the method for producing a precursor of the present invention, it is possible to produce a precursor from which an electrolyte material having a high proton conductivity and being excellent in hot water resistance can be obtained.

BRIEF DESCRIPTION OF DRAWINGS

Fig. 1 is a cross-section illustrating an example of a membrane/electrode assembly of the present invention.
Fig. 2 is a cross-section illustrating another example of a membrane/electrode assembly of the present invention.

The terms in this specification have the following meanings.
A "unit" in a polymer means an atomic group derived from a monomer formed by polymerization of the monomer (that is, a "monomer unit") or an atomic group formed by converting part of the atomic group to another structure by treating the polymer.
An "ion exchange group" means a group having $H^+$, a monovalent metal cation, an ammonium ion or the like. The ion exchange group may, for example, be a sulfonic acid group, a sulfonimide group or a sulfonmethide group.
A "sulfonic acid group" means $-SO_3^-H^+$ or $-SO_3^-M^+$ (wherein $M^+$ is a monovalent metal ion, or an ammonium ion in which at least on hydrogen atom may be substituted with a hydrocarbon group.
The "proton conductivity" means a conductivity calculated from the resistance of a membrane measured in such a manner that a substrate having four-probe electrodes disposed at 5 mm intervals is closely attached to a membrane having a 5 mm width formed from a polymer, and by known four-probe method, the resistance of the membrane is measured under constant temperature and constant humidity conditions at a temperature of 80°C under a relative humidity of 50%RH at an alternating current of 10 kHz under a voltage of 1 V.
In this specification, units represented by the formula u1 will be referred to as "units (u1)". The same applies to units represented by other formulae.

In this specification, a compound represented by the formula m1 will be referred to as a "compound m1". The same applies to compounds represented by other formulae.

<Electrolyte material>

The electrolyte material of the present invention is formed from a polymer H having units u1 and units based on tetrafluoroethylene (hereinafter referred to as "TFE") (hereinafter referred to as "TFE units").

The polymer H has the units u1 and the TFE units.

The polymer H may further have units other than the units u1 and the TFE units (hereinafter referred to as "other units") as the case requires, within a range not to impair the effects of the present invention. The units having only one ion exchange group are one type of "other units".

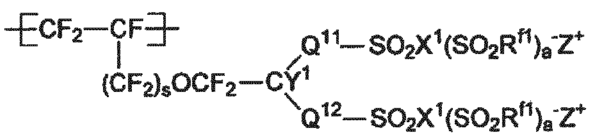

(u1)

wherein $Q^{11}$ is a perfluoroalkylene group which may have an etheric oxygen atom, $Q^{12}$ is a single bond or a perfluoroalkylene group which may have an etheric oxygen atom, $Y^1$ is a fluorine atom or a monovalent perfluoroorganic group, s is 0 or 1, $R^{f1}$ is a perfluoroalkyl group which may have an etheric oxygen atom, $X^1$ is an oxygen atom, a nitrogen atom or a carbon atom, a is 0 when $X^1$ is an oxygen atom, 1 when $X^1$ is a nitrogen atom and 2 when $X^1$ is a carbon atom, and $Z^+$ is $H^+$, a monovalent metal ion or an ammonium ion in which at least one hydrogen atom may be substituted with a hydrocarbon group. The single bond means direct binding of the carbon atom of $CY^1$ and the sulfur atom of $SO_2$. The organic group means a group having at least one carbon atom.

When the perfluoroalkylene group for $Q^{11}$ or $Q^{12}$ has an etheric oxygen atom, the number of such oxygen atom may be one or may be two or more. Further, such oxygen atom may be present between carbon atoms in the perfluoroalkylene group, or may be present at the $CY^1$ side terminal of the perfluoroalkylene group.

The perfluoroalkylene group may be linear or may be branched, and is preferably linear.

The number of carbon atoms in the perfluoroalkylene group is preferably from 1 to 6, more preferably from 1 to 4. When the number of carbon atoms is at most 6, the boiling point of the monomer as the raw material will be low, whereby purification by distillation becomes easy. Further, when the number of carbon atoms is at most 6, it is possible to prevent a decrease in the ion exchange capacity of the polymer H, and to prevent a decrease in the proton conductivity.

$Q^{12}$ is preferably a $C_{1-6}$ perfluoroalkylene group which may have an etheric oxygen atom. When $Q^{12}$ is a $C_{1-6}$ perfluoroalkylene group which may have an etheric oxygen atom, the stability of the power generation performance will be excellent when a polymer electrolyte fuel cell is operated over a long period of time, as compared with a case where $Q^{12}$ is a single bond.

At least one of $Q^{11}$ and $Q^{12}$ is preferably a $C_{1-6}$ perfluoroalkylene group having an etheric oxygen atom. A monomer having such a $C_{1-6}$ perfluoroalkylene group having an etheric oxygen atom, can be prepared without via a fluorination reaction with fluorine gas, whereby the yield is good, and the production is easy.

It is preferred that both $Q^{11}$ and $Q^{12}$ are a perfluoroalkylene group having an etheric oxygen atom. When both $Q^{11}$ and $Q^{12}$ are a perfluoroalkylene group having an etheric oxygen atom, flexibility of the polymer H will improve. A polymer electrolyte membrane containing an electrolyte material formed of a highly flexible polymer H is less likely to be broken even when repeatedly subjected to swelling in a wet state and shrinkage in a dry state, and is likely to have favorable durability. Further, its difference between the elastic modulus in a wet state and the elastic modulus in a dry state tends to be small, cracks resulting from wrinkles formed by repetition of swelling in a wet state and shrinkage in a dry state are less likely to progress, and favorable power generation performance is likely to be kept.

The perfluoroalkyl group for $R^{f1}$ may be linear or branched and is preferably linear.

The perfluoroalkyl group has preferably from 1 to 6, more preferably from 1 to 4 carbon atoms. The perfluoroalkyl group is preferably a perfluoromethyl group, a perfluoroethyl group or the like.

In a case where the unit us has two or more $R^{f1}$s, the $R^{f1}$s may be the same or different from each other.
$-SO_2X^1(SO_2R^{f1})a^-Z^+$ may be $-SO_3^-Z^+$, $-SO_2N(SO_2R^{f1})^-Z^+$ or $-SO_2C(SO_2R^{f1})_2^-Z^+$.
$Y^1$ is preferably a fluorine atom or a $C_{1-6}$ linear perfluoroalkyl group which may have an etheric oxygen atom.

The units u1 are preferably units u1-1 to u1-3 in view of easy production of the polymer H and easy industrial application. More preferred are units u1-2 or units u1-3, in that the obtainable polymer H is flexible and when formed into a polymer electrolyte membrane, it is less likely to be broken even when repeatedly subjected to swelling in a wet state and shrinkage in a dry state.

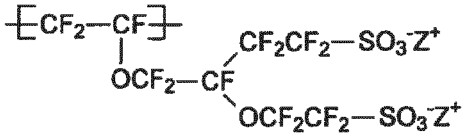

(u1-1)

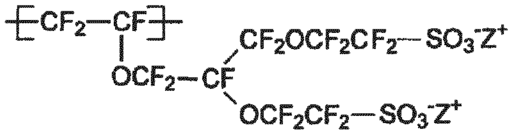

(u1-2)

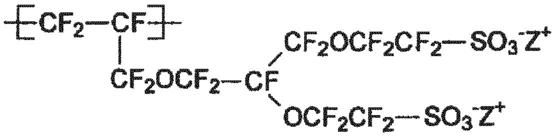

(u1-3)

The polymer H further has TFE units in view of excellent mechanical properties and chemical durability.

Other units are units based on a monomer other than a monomer to form the units u1 (the after-mentioned compound m1) and TFE (hereinafter referred to as "other monomer").

Such other monomer may, for example, be chlorotrifluoroethylene, trifluoroethylene, vinylidene fluoride, vinyl fluoride, ethylene, propylene, a perfluoro $\alpha$-olefin (such as hexafluoropropylene), a (perfluoroalkyl)ethylene (such as (perfluorobutyl)ethylene), a (perfluoroalkyl)propene (such as 3-perfluorooctyl-1-propene), a perfluorovinyl ether (such as a perfluoro(alkyl vinyl ether) or perfluoro(etheric oxygen atom-containing alkyl vinyl ether)), or a perfluoromonomer having a 5-membered ring disclosed in WO2011/013578.

The polymer H may have single type of each of the units u1 and other units, or may have two or more types of each of the units u1 and other units.

The polymer H preferably has no unit having only one ion exchange group, whereby an electrolyte material having a not too low EW and having a sufficiently high proton conductivity will be obtained. The units having only one ion exchange group may, for example, be units u2.

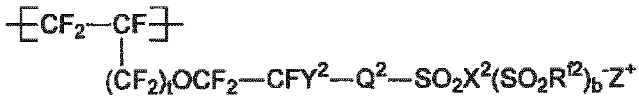

(u2)

wherein $Q^2$ is a single bond or a perfluoroalkylene group which may have an etheric oxygen atom, $Y^2$ is a fluorine atom or a monovalent perfluoroorganic group, t is 0 or 1, $R^{f2}$ is a perfluoroalkyl group which may have an etheric oxygen atom, $X^2$ is an oxygen atom, a nitrogen atom or a carbon atom, b is 0 when $X^2$ is an oxygen atom, 1 when $X^2$ is a nitrogen atom and 2 when $X^2$ is a carbon atom, $Z^+$ is $H^+$, a monovalent metal ion or an ammonium ion in which at least one hydrogen atom may be substituted with a hydrocarbon group. The single bond means direct binding of the carbon atom of $CFY^2$ and the sulfur atom of $SO_2$. The organic group means a group having at least one carbon atom.

When the perfluoroalkylene group for $Q^2$ has an etheric oxygen atom, the number of such oxygen atom may be one or may be two or more. Further, such oxygen atom may be present between carbon atoms in the perfluoroalkylene group, or may be present at the $CY^1$ side terminal of the perfluoroalkylene group.

The perfluoroalkylene group for $Q^2$ may be linear or branched.

The perfluoroalkyl group for $R^{f2}$ may be linear or branched.

$-SO_2X^2(SO_2R^{f2})_b^-Z^+$ may be $-SO_3^-Z^+$, $-SO_2N(SO_2R^{f2})Z^+$ or $-SO_2C(SO_2R^{f2})_2^-Z^+$.

The monovalent perfluoroorganic group for $Y^2$ may be a trifluoromethyl group.

The units u2 may, for example, be units u2-1 to u2-4.

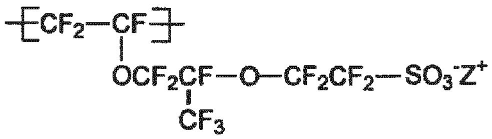

(u2-1)

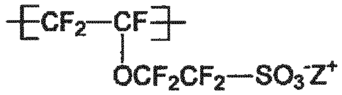

(u2-2)

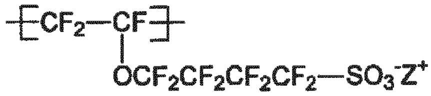

(u2-3)

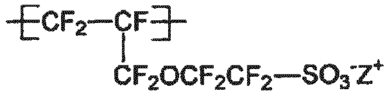

(u2-4)

The proportions of the respective units are properly adjusted depending upon EW, proton conductivity, hot water resistance, mechanical properties, etc. required for the electrolyte material.

The proportion of the units u1 in the polymer H is from 18.1 to 29.9 mol%, preferably from 18.7 to 28.2 mol% to all the units contained in the polymer H. When the proportion of the units u1 is at least the lower limit value of the above range, the electrolyte material will be more excellent in the proton conductivity and hot water resistance. When the proportion of the units u1 is at most the upper limit value of the above range, effects by the units other than the units u1 will hardly be impaired.

The proportion of the TFE units in the polymer H is from 70.1 to 81.9 mol%, preferably from 71.8 to 81.3 mol% to all the units contained in the polymer H. When the proportion of the TFE units is at least the lower limit value of the above range, the electrolyte material will be more excellent in mechanical properties. When the proportion of the TFE units is at most the upper limit value of the above range, effects by units other than the TFE units will hardly be impaired.

The total proportion of other units in the polymer H is preferably from 0 to 19.1 mol%, more preferably from 0 to 11.8 mol%, further preferably from 0 to 9.5 mol% to all the units contained in the polymer H. When the total proportion of other units is at most the upper limit value of the above range, effects by the units u1 and the TFE units will hardly be impaired. Further, even when the polymer H has other units, it preferably has no unit having only one ion exchange group as mentioned above.

EW of the polymer H of the present invention is a value calculated from the following formula I and is from 400 to 550 g/eq, preferably from 430 to 540 g/eq, more preferably from 440 to 530 g/eq.

$$EW=1000/AR \qquad (I)$$

wherein EW is the equivalent weight (number of g of the polymer per 1 equivalent amount of ion exchange groups), and AR is the ion exchange capacity (milliequivalent of ion exchange groups per 1 g of the polymer).

When EW of the polymer H is at most the upper limit value of the above range, the electrolyte material is more excellent in the proton conductivity. When EW is at least the lower limit value of the above range, a polymer H having a high molecular weight will easily be prepared, and the resulting electrolyte material will be more excellent in hot water resistance. Further, the polymer H will not excessively swell with water, whereby the electrolyte material will be more excellent in mechanical properties.

Of the electrolyte material of the present invention, the mass reduction ratio when immersed in hot water at 120°C for 24 hours is at most 15 mass%, preferably at most 12 mass%, more preferably at most 10 mass%. When the mass reduction ratio is at most the upper limit value of the above range, the electrolyte material will be excellent in hot water resistance. The mass reduction ratio is preferably as low as possible, and its lower limit is 0 mass%.

Of the electrolyte material of the present invention, the proton conductivity at a temperature of 80°C under a relative humidity of 50%RH is preferably at least 0.150 S/cm, more preferably at least 0.155 S/cm, further preferably at least 0.16 S/cm. When the proton conductivity is at least the lower limit value of the above range, the electrolyte material will be more excellent in the proton conductivity. The proton conductivity is preferably as high as possible, and there is no upper limit.

The polymer H as the electrolyte material is produced by converting $-SO_2F$ groups of a polymer F which is a precursor of the electrolyte material into ion exchange groups.

The polymer F has units u'1 and TFE units.

The polymer F may further have units other than the units u'1 and the TFE units as the case requires, within a range not to impair the effects of the present invention.

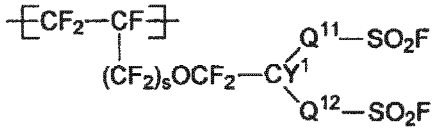

(u'1)

wherein $Q^{11}$, $Q^{12}$, $Y^1$ and s are the same as $Q^{11}$, $Q^{12}$, $Y^1$ and s in the units u1, and the preferred embodiments are also the same.

The units u'1 are preferably units u'1-1 to u'1-3 in view of easy production of the polymer F and easy industrial application. More preferred are units u'1-2 or u'1-3, in that the obtainable polymer F is flexible and when formed into the polymer H and further into a polymer electrolyte membrane, the membrane is less likely to be broken even when repeatedly subjected to swelling in a wet state and shrinkage in a dry state, and tends to have favorable durability, the difference between the elastic modulus in a wet state and the elastic modulus in a dry state tends to be small, cracks resulting from wrinkles formed by repetition of swelling in a wet state and shrinkage in a dry state are less likely to progress, and favorable power generation performance is likely to be kept.

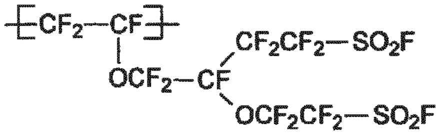

(u'1-1)

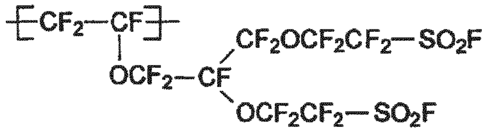

(u'1-2)

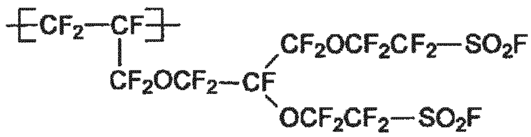

(u'1-3)

The polymer F further has TFE units, whereby the polymer H will be excellent in mechanical properties and chemical durability.

Other units in the polymer F are units other than the units u'1 and the TFE units.

The polymer F may have single type of each of the units u'1 and other units, or may have two or more types of each of the units u'1 and other units.

The polymer F preferably has no unit having only one $-SO_2F$ group as other units, whereby an electrolyte material having a not too low EW and having a sufficiently high proton conductivity will be obtained. The units having only one $-SO_2F$ group may, for example, be units u'2.

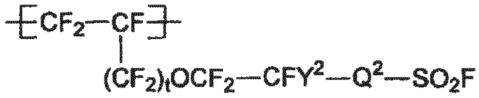

(u'2)

wherein $Q^2$, $Y^2$ and t are the same as $Q^2$, $Y^2$ and t in the units u2.

The units u'2 may, for example, be units u'2-1 to u'2-4.

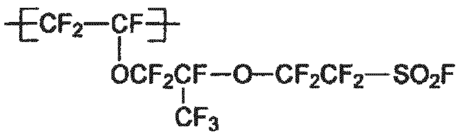

(u'2-1)

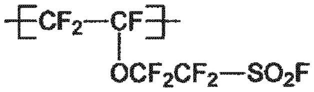

(u'2-2)

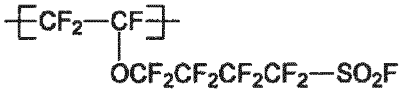

(u'2-3)

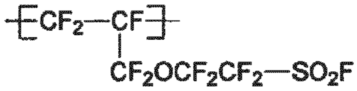

(u'2-4)

The proportions of the respective units may be properly adjusted depending upon EW, proton conductivity, hot water resistance, mechanical properties, etc. required for the electrolyte material.

The preferred ranges of the proportions of the respective units are the same as the preferred ranges of the proportions of the respective units in the polymer H.

TQ of the polymer F is preferably from 220 to 300°C, more preferably from 225 to 290°C, further preferably from 230 to 280°C. When TQ of the polymer F is at least the above lower limit value, the polymer H has a sufficient molecular weight, and the electrolyte material will be more excellent in hot water resistance and mechanical properties. When TQ of the polymer F is at most the above upper limit value, the polymer H is well soluble or dispersible, and the after-described liquid composition will easily be produced.

TQ is an index of the molecular weight and the softening temperature of a polymer, and is a temperature at which the extrusion amount becomes 100 $mm^3$/sec, when the polymer F is melted and the molten polymer F is extruded from a nozzle having a length of 1 mm and an inner diameter of 1 mm, under 2.94 MPa.

The polymer F which is the precursor of the electrolyte material is produced by polymerizing a monomer component containing the compound m1 and TFE and as the case requires, other monomer.

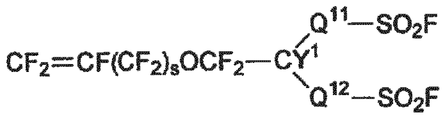

(m1)

$Q^{11}$, $Q^{12}$, $Y^1$ and s are the same as $Q^{11}$, $Q^{12}$, $Y^1$ and s in the units u'1, and the preferred embodiments are also the same.

The compound m1 may be produced, for example, by a known preparation method such as the method disclosed in WO2007/013533.

The monomer component preferably contains no monomer having only one $-SO_2F$ group as other units in the polymer F, in order to obtain an electrolyte material having a not too low EW and having a sufficiently high proton conductivity. A monomer having only one $-SO_2F$ group may, for example, be compound m2.

$$CF_2=CF(CF_2)_lOCF_2\text{-}CFY^2\text{-}Q^2\text{-}SO_2F \qquad \text{(m2)}$$

wherein $Q^2$, $Y^2$ and t are the same as $Q^2$, $Y^2$ and t in the units u'2.

As the polymerization method, a known polymerization method may be mentioned such as bulk polymerization method, solution polymerization method, suspension polymerization method or emulsion polymerization method. Otherwise, polymerization may be carried out in liquid or supercritical carbon dioxide.

The polymerization method is preferably solution polymerization method in that the monomer component can be sufficiently polymerized even when the proportion of the compound m1 is increased, and a polymer H finally having EW of from 400 to 550 g/eq is easily obtained. By a polymerization method other than solution polymerization method, if the proportion of the compound m1 is high, the monomer component is less likely to be polymerized, and a polymer H finally having EW of from 400 to 550 g/eq is hardly obtained.

Polymerization is carried out under such a condition that radicals will form. The method to form radicals may, for example, be a method of applying radiation such as ultraviolet rays, $\gamma$-rays or electron beams, or a method of adding a radical initiator.

As a method of converting $-SO_2F$ groups of the polymer F into ion exchange groups, the method disclosed in WO2011/013578 may be mentioned. For example, to convert $-SO_2F$ groups into acid-form sulfonic acid groups ($-SO_3^-$

$H^+$ groups), a method of bringing the $-SO_2F$ groups of the polymer F into contact with a base to hydrolyze and convert them into salt form sulfonic acid groups, and bringing the salt form sulfonic acid groups into contact with an acid to convert them into acid form thereby to obtain acid-form sulfonic acid groups.

The above-described electrolyte material of the present invention comprises the polymer H having the units u1, whereby it has a sufficiently low EW and is excellent in hot water resistance from the following reasons.

Since the polymer H has units u1 having two ion exchange groups, it tends to have a low EW as compared with a conventional polymer having units having only one ion exchange group. Accordingly, the electrolyte material of the present invention which is formed of the polymer H is likely to have high proton conductivity. Further, it is considered that in the polymer H, ion exchange groups are close to each other due to the structure of the units u1, and accordingly the polymer H has a supermolecular structure and a cluster formation state different from those of a conventional polymer having units having only one ion exchange group such as the units u2. Accordingly, the polymer H has a high proton conductivity as compared with a conventional polymer even when it has the same EW as a conventional polymer.

Further, a conventional polymer having the units u2 and the TFE units hardly has a high molecular weight and is inferior in hot water resistance, when its EW is lowered. The electrolyte material of the present invention can achieve the same level of EW with a smaller number of moles of units u1 than conventional units u2, whereby the content of the TFE units in the polymer can be increased, and a high molecular weight polymer is likely to be obtained. That is, the electrolyte material of the present invention has a high molecular weight even though it has a low EW, and is thereby excellent in hot water resistance.

<Liquid composition>

The liquid composition of the present invention is a composition comprising a dispersion medium and the electrolyte material of the present invention dispersed in the dispersion medium.

The dispersion medium is preferably one containing an organic solvent having a hydroxy group, whereby the electrolyte material of the present invention will readily be dispersed.

The organic solvent having a hydroxy group may, for example, be methanol, ethanol, 1-propanol, 2-propanol, 2,2,2-trifluoroethanol, 2,2,3,3,3-pentafluoro-1-propanol, 2,2,3,3,-tetrafluoro-1-propanol, 4,4,5,5,5-pentafluoro-1-pentanol, 1,1,1,3,3,3-hexafluoro-2-propanol, 3,3,3-trifluoro-1-propanol, 3,3,4,4,5,5,6,6,6-nonafluoro-1-hexanol, or 3,3,4,4,5,5,6,6,7,7,8,8,8-tridecafluoro-1-octanol.

As the organic solvent having a hydroxy group, one type may be used alone, or two or more types may be used as mixed.

The dispersion medium is preferably one containing water, whereby the electrolyte material of the present invention will readily be dispersed.

The proportion of water is preferably from 10 to 99 mass%, more preferably from 40 to 99 mass%, to the dispersion medium. Dispersibility of the electrolyte material in the dispersion medium can be improved by increasing the proportion of water.

The proportion of the organic solvent having a hydroxy group is preferably from 1 to 90 mass%, more preferably from 1 to 60 mass%, to the dispersion medium.

The proportion of the electrolyte material is preferably from 1 to 50 mass%, more preferably from 3 to 30 mass%, to the liquid composition.

The liquid composition may be prepared in accordance with the preparation method as described in e.g. JP-B-H04-35226, JP-A-2001-504872, JP-A-2005-82749, WO2006/38928 or JP-A-2004-519296.

A specific method of preparing the liquid composition may be a method of applying shearing such as stirring to the electrolyte material in the dispersion medium under atmospheric pressure or in a sealed state in an autoclave or the like.

The preparation temperature is preferably from 0 to 250°C, more preferably from 20 to 150°C. As the case requires, shearing such as ultrasonic waves may be applied.

Further, in the case of applying shearing such as stirring to a mixed solution obtained by mixing the electrolyte material with an organic solvent and water to prepare the liquid composition, the shearing such as stirring may be applied to a mixed solution obtained by adding the organic solvent and water all at once to the electrolyte material, or the organic solvent and water may be added to the electrolyte material dividedly in a plurality of times, and the shearing such as stirring may be applied between the addition operations. For example, the shearing such as stirring may be applied to a mixture having a part of the organic solvent and a part of water added to the electrolyte material and then the remainder of the organic solvent and water is added to the mixture, and the shearing such as stirring is applied again. Otherwise, it is also possible that shearing such as stirring is applied after adding only the organic solvent to the electrolyte material, and only water is added, then the shearing such as stirring is applied again.

The liquid composition of the present invention is suitably used for forming a polymer electrolyte membrane of a membrane/electrode assembly as described hereinafter.

<Membrane/electrode assembly>

Fig. 1 is a cross-section illustrating an example of a membrane/electrode assembly for a polymer electrolyte fuel cell (hereinafter referred to as membrane/electrode assembly) of the present invention. A membrane/electrode assembly 10 comprises an anode 13 having a catalyst layer 11 and a gas diffusion layer 12, a cathode 14 having a catalyst layer 11 and a gas diffusion layer 12, and a polymer electrolyte membrane 15 disposed between the anode 13 and the cathode 14 in a state where it is in contact with the catalyst layers 11.

The membrane/electrode assembly 10 may have a carbon layer 16 between the catalyst layer 11 and the gas diffusion layer 12 as shown in Fig. 2. By disposing the carbon layer 16, the gas diffusion properties on the surface of the catalyst layer 11 will be improved, and the power generation characteristics of the membrane/electrode assembly 10 will be remarkably improved.

The catalyst layer 11 is a layer containing a catalyst and a proton conductive polymer.

The catalyst may be a supported catalyst having platinum or a platinum alloy supported on a carbon carrier.

The carbon carrier may, for example, be a carbon black powder.

The proton conductive polymer may, for example, be the electrolyte material of the present invention or a known electrolyte material.

The catalyst layer 11 may contain a water-repellent agent with a view to increasing the effect to suppress flooding phenomenon. The water-repellent agent may, for example, be a TFE/hexafluoropropylene copolymer, a TFE/perfluoro(alkyl vinyl ether) copolymer or polytetrafluoroethylene (hereinafter referred to as "PTFE"). The water-repellent agent is preferably a fluorinated polymer soluble in a solvent, from such a viewpoint that the water repellent treatment of the catalyst layer 11 is easy. The amount of the water-repellent agent is preferably from 0.01 to 30 mass% to the catalyst layer.

The catalyst layer 11, may be formed, for example, by the following methods.

(i) A method of applying a fluid for forming a catalyst layer on the polymer electrolyte membrane 15, the gas diffusion layer 12 or the carbon layer 16, followed by drying.
(ii) A method of applying a fluid for forming a catalyst layer on a substrate film, followed by drying to form a catalyst layer 11, and transferring the catalyst layer 11 to the polymer electrolyte membrane 15.

The fluid for forming a catalyst layer is a fluid comprising the electrolyte material and the catalyst dispersed in a dispersion medium. The fluid for forming a catalyst layer may be prepared, for example, by mixing the liquid composition containing the electrolyte material with a dispersion of the catalyst.

The gas diffusion layer 12 has a function to uniformly diffuse a gas into the catalyst layer 11 and a function as a current collector.

The gas diffusion layer 12 may, for example, be carbon paper, carbon cloth or carbon felt.

The gas diffusion layer 12 is preferably subjected to water repellent treatment e.g. with PTFE.

The carbon layer 16 is a layer containing carbon and a nonionic fluorinated polymer.

The carbon may, for example, be carbon black or carbon fibers. As the carbon fibers, carbon nanofibers having a fiber diameter of from 1 to 1,000 nm and a fiber length of at most 1,000 $\mu$m are preferred.

The nonionic fluorinated polymer may, for example, be PTFE.

The polymer electrolyte membrane 15 is a membrane containing the electrolyte material of the present invention.

The polymer electrolyte membrane 15 can be formed, for example, by a method (a casting method) wherein the liquid composition of the present invention is applied on a substrate film or the catalyst layer 11, followed by drying.

In order to stabilize the polymer electrolyte membrane 15, it is preferred to carry out heat treatment. The temperature for the heat treatment is preferably from 130 to 200°C, although it depends also on the type of the electrolyte material. When the temperature for the heat treatment is at least 130°C, the electrolyte material will not excessively contain water. When the temperature for the heat treatment is at most 200°C, heat decomposition of ion exchange groups may be suppressed, and a decrease in the proton conductivity of the polymer electrolyte membrane 15 may be suppressed.

The polymer electrolyte membrane 15 may be treated with an aqueous hydrogen peroxide solution as the case requires.

The polymer electrolyte membrane 15 may be reinforced by a reinforcing material. The reinforcing material may, for example, be a porous body, fibers, woven fabric or nonwoven fabric. The material for the reinforcing material may, for example, be PTFE, a TFE/hexafluoropropylene copolymer, a TFE/perfluoro(alkyl vinyl ether) copolymer, polyethylene, polypropylene or polyphenylene sulfide.

The polymer electrolyte membrane 15 may contain at least one type of atoms selected from the group consisting of cerium and manganese in order to further improve the durability. Cerium and manganese will decompose hydrogen peroxide which is a substance to cause deterioration of the polymer electrolyte membrane 15. Such cerium or manganese

is preferably present in the form of ions in the polymer electrolyte membrane 15, and so long as it is present in the form of ions, it may be present in any state in the polymer electrolyte membrane 15.

The polymer electrolyte membrane 15 may contain silica or a hetero polyacid (such as zirconium phosphate, phosphorus molybdic acid or phosphorus tungstic acid) as a water retention agent to prevent drying.

The membrane/electrode assembly 10 is produced, for example, by the following method.

(i) A method of forming catalyst layers 11 on a polymer electrolyte membrane 15 to form a membrane/catalyst layer assembly, and sandwiching such a membrane/catalyst layer assembly between gas diffusion layers 12.
(ii) A method of forming a catalyst layer 11 on a gas diffusion layer 12 to form electrodes (anode 13 and cathode 14), and sandwiching a polymer electrolyte membrane 15 between such electrodes.

In a case where the membrane/electrode assembly 10 has a carbon layer 16, the membrane/electrode assembly 10 is produced, for example, by the following method.

(i) A method of applying a dispersion containing carbon and a nonionic fluorinated polymer on a substrate film, followed by drying to form a carbon layer 16, forming a catalyst layer 11 on the carbon layer 16, bonding such catalyst layers 11 to a polymer electrolyte membrane 15, separating the substrate films to form a membrane/catalyst layer assembly having the carbon layers 16, and sandwiching such a membrane/catalyst layer assembly between gas diffusion layers 12.
(ii) A method of applying a dispersion containing carbon and a nonionic fluorinated polymer on a gas diffusion layer 12, followed by drying to form a carbon layer 16, and sandwiching a membrane/catalyst layer assembly having catalyst layers 11 formed on a polymer electrolyte membrane 15 between the gas diffusion layers 12 each having the carbon layer 16.

In the above-described membrane-electrode assembly 10, the polymer electrolyte membrane 15, which contains the electrolyte material of the present invention, is excellent in proton conductivity and is excellent in hot water resistance.

<Polymer electrolyte fuel cell>

The membrane/electrode assembly of the present invention is used for a polymer electrolyte fuel cell. A polymer electrolyte fuel cell is produced, for example, by sandwiching a membrane/electrode assembly between two separators to form a cell, and stacking a plurality of such cells.

As a separator, an electrically conductive carbon plate having grooves formed to constitute flow paths for a fuel gas or an oxidizing gas containing oxygen (such as air or oxygen) may, for example, be mentioned.

As a type of the polymer electrolyte fuel cell, a hydrogen/oxygen type fuel cell or a direct methanol type fuel cell (DMFC) may, for example, be mentioned. Methanol or a methanol aqueous solution to be used as a fuel for DMFC may be a liquid feed or a gas feed.

EXAMPLES

Now, the present invention will be described in detail with reference to Examples. However, it should be understood that the present invention is by no means restricted to such specific Examples. Ex. 1 to 6 are Examples of the present invention, and Ex. 7 and 8 are Comparative Examples.

(Ion exchange capacity)

$-SO_2F$ groups in the polymer F were hydrolyzed and converted into $-SO_3Na$ groups with a 0.7N sodium hydroxide solution at 60°C over a period of at least 72 hours. Unreacted sodium hydroxide was titrated with 0.1N hydrochloric acid to determine the ion exchange capacity (AR). AR obtained here is the same as AR of the polymer H.

(Proportion of units)

The proportions of the respective units in the polymer F were obtained from the results of measurement of AR.

The proportions of the respective units in the polymer H are omitted since they correspond to the proportions of the respective units in the polymer F.

(TQ)

TQ (unit: °C) is temperature at which the extrusion amount becomes 100 $mm^3$/sec, when the polymer F is melted and the molten polymer F is extruded from a nozzle having a length of 1 mm and an inner diameter of 1 mm, under 2.94 MPa. The extrusion amounts of the polymer F were measured at various temperatures, by using flow tester CFT-500D (manufactured by SHIMADZU CORPORATION), and the temperature at which the extrusion amount became 100 $mm^3$/sec was taken as TQ.

(Equivalent weight)

The equivalent weight (EW) of the polymer H was obtained in accordance with the formula I.

(Proton conductivity)

From a membrane-form polymer H obtained by the after-described method, a 5 mm width membrane was cut. A substrate having four-probe electrodes disposed at 5 mm intervals was closely attached to the membrane, and by known four-probe method, the resistance of the membrane was measured under constant temperature and constant humidity conditions at a temperature of 80°C under a relative humidity of 50%RH at an alternating current of 10 kHz under a voltage of 1 V, and the proton conductivity was calculated from the resistance.

(Hot water resistance)

The polymer H in a membrane form obtained by the after-described method was put in a nitrogen-sealed glove box and dried at room temperature (from about 15 to about 25°C, the same applies hereinafter) for 40 hours or longer, and then the mass (W1) was measured. The polymer H was put in a sealed container filled with 120 mL of ultrapure water, and the sealed container was put in an oven at 120°C. 24 hours later, heating was terminated, the polymer H was withdrawn from the sealed container, and moisture on the surface was wiped off with filter paper (manufactured by ADVANTEC, No: 2). The polymer H was put in a nitrogen-sealed glove box and dried at room temperature for 40 hours or longer, and then the mass (W2) was measured. The mass reduction ratio (mass%) was calculated from the following formula II.

$$\text{Mass reduction ratio} = (W1-W2) \div W1 \times 100 \qquad (II)$$

(Abbreviations)

BSVE-2E: monomer to give unit u'1-2
S-PSVE: monomer to give unit u'2-2
TFE: tetrafluoroethylene
AC2000: $CF_3CF_2CF_2CF_2CF_2CF_2H$ (manufactured by Asahi Glass Company, Limited, ASAHIKLIN (registered trademark) AC-2000)
AK225G: $CClF_2CF_2CHClF$ (manufactured by Asahi Glass Company, Limited, ASAHIKLIN (registered trademark) AK-225G)
AK-141b: $CH_3CCl_2F$
AE3000: $CF_3CH_2OCF_2CF_2H$ (manufactured by Asahi Glass Company, Limited, ASAHIKLIN (registered trademark) AE-3000)
V601: 2,2'-azobis(dimethyl isobutyrate) (manufactured by Wako Pure Chemical Industries, Ltd., V-601),
IPP: diisopropyl peroxydicarbonate (manufactured by NOF Corporation, PEROYL (registered trademark) IPP)
TCP: di-(4-tert-butylcyclohexyl)peroxydicarbonate (manufactured by NOF Corporation, PEROYL (registered trademark) TCP)
PFB: bis(heptafluorobutyryl) peroxide (manufactured by NOF Corporation, PFB) (Ex. 1)

Into a stainless steel autoclave having an internal volume of 2,575 mL, 1,996.4 g of BSVE-2E was charged, followed by vacuum deaeration at room temperature. The temperature was raised to 57°C, and TFE was charged up to 0.76 MPaG. No change of the pressure was confirmed, 9.29 g of an AC2000 solution having 400 mg of V601 dissolved was added under pressure with nitrogen gas, and addition line was washed with 11.0 g of AC2000. While the temperature and the pressure were kept constant, TFE was continuously supplied to conduct polymerization. After 14.5 hours from the initiation of polymerization, the autoclave was cooled to terminate the polymerization reaction, and the gas in the system was purged to obtain a solution of polymer F-1.

To the solution of polymer F-1, 1,800 g of AC2000 was added and mixed. The temperature of the polymer solution was 19°C. The polymer solution was added to 11.5 kg of AE3000 at 10°C to agglomerate the polymer F-1 to form particles. The liquid containing the polymer F-1 particles was subjected to filtration using filter paper (manufactured by ADVANTEC, No. 4A). To wash the obtained polymer F-1 particles, an operation of adding 1,800 g of AE3000, followed by stirring and conducting filtration was repeated five times. The obtained polymer F-1 particles were vacuum dried at 140°C overnight to obtain 339.7 g of polymer F-1. TQ, AR, EW calculated from AR, and the proportions of the respective units calculated from AR, of the polymer F-1 are shown in Table 1.

The polymer F-1 was pressed by a pressing machine (manufactured by TESTER SANGYO CO., LTD., SA-301) at the same temperature as TQ of the polymer F-1 to prepare a membrane having a size of 30 mm x 50 mm and a thickness of from 100 to 200 μm. The membrane was dipped in an aqueous solution containing 20 mass% of potassium hydroxide at 80°C for 16 hours to hydrolyze and convert $-SO_2F$ groups of the polymer F-1 into $-SO_3K$ groups. The membrane was immersed in a 3 mol/L hydrochloric acid aqueous solution for 2 hours. The hydrochloric acid aqueous solution was changed, and the same treatment was conducted further for 4 times to convert $-SO_3K$ groups of the polymer to sulfonic acid groups to obtain a membrane-form polymer H-1.

The proton conductivity and hot water resistance (mass reduction ratio) of the polymer H-1 are shown in Table 1.

Hereinafter, with respect to the obtained polymers F-2 to F-6 and polymers H-2 to H-6, the composition and physical properties of each polymer are shown in Table 1. Further, with respect to polymers F-7, F-8, H-7 and H-8, the composition and physical properties of each polymer are shown in Table 2.

(Ex. 2)

Into a stainless steel autoclave having an internal volume of 230 mL, 194.0 g of BSVE-2E was charged, followed by freeze-deaeration twice. The temperature was raised to 40°C, and TFE was introduced up to 0.5 MPaG. No change of the pressure was confirmed, and then 1.02 g of an AC2000 solution having 19.0 mg of IPP dissolved was added under pressure with nitrogen gas, and then addition line was washed with 1.0 g of AC2000. While the temperature and the pressure were kept constant, TFE was continuously supplied to conduct polymerization. After 6 hours from the initiation of polymerization, the autoclave was cooled to terminate the polymerization reaction, and the gas in the system was purged to obtain a solution of polymer F-2.

At room temperature, the solution of polymer F-2 was added to 600 g of AE3000 at 5°C to agglomerate the polymer F-2, and in the same manner as in Ex. 1, polymer F-2 particles were obtained. In the same operation as in Ex. 1 except that 300 g of AE3000 was added to the obtained polymer F-2 particles for washing, 11.89 g of polymer F-2 was obtained.

In the same manner as in Ex. 1, a membrane-form polymer H-2 was obtained.

(Ex. 3)

Into a stainless steel autoclave having an internal capacity of 230 mL, 175.0 g of BSVE-2E was charged, followed by freeze-deaeration twice. The temperature was raised to 40°C, and TFE was introduced up to 0.42 MPaG. No change of the pressure was confirmed, and then the pressure was elevated by 0.1 MPaG with a nitrogen gas to 0.52 MPaG. 1.14 g of an AK225G solution having 35 mg of TCP dissolved was added under pressure with nitrogen gas, and then addition line was washed with 1.01 g of AK225G. While the temperature and the pressure were kept constant, TFE was continuously supplied to conduct polymerization. After 8 hours from the initiation of polymerization, the autoclave was cooled to terminate the polymerization reaction, and the gas in the system was purged to obtain a solution of polymer F-3.

At room temperature, the solution of polymer F-3 was added to 600 g of AE3000 at 5°C to agglomerate the polymer F-3, and in the same manner as in Ex. 1, polymer F-3 particles were obtained. In the same manner as in Ex. 2 except that 450 g of AE3000 was added to the obtained polymer F-3 particles, 7.13 g of polymer F-3 was obtained.

In the same manner as in Ex. 1, a membrane-form polymer H-3 was obtained.

(Ex. 4)

Into a stainless steel autoclave having an internal capacity 1,006 mL, 901.7 g of BSVE-2E was charged under reduced pressure, followed by vacuum deaeration at room temperature. The temperature was raised to 40°C, and TFE was introduced up to 0.55 MPaG. No change of the pressure was confirmed, and then 2.09 g of an AC2000 solution having 90.70 mg of IPP dissolved was added under pressure with nitrogen gas, and then addition line was washed with 3.0 g of AC2000. While the temperature and the pressure were kept constant, TFE was continuously supplied to conduct polymerization. After 7 hours from the initiation of polymerization, the autoclave was cooled to terminate the polymerization reaction, and the gas in the autoclave was purged to obtain a solution of polymer F-4.

At room temperature, the solution of polymer F-4 was added to 2,700 g of AE3000 at 10°C to agglomerate the polymer F-4, and in the same manner as in Ex. 1, polymer F-4 particles were obtained. In the same manner as in Ex. 1 except that washing was conducted three times by adding 500 g of AE3000 to the obtained polymer F-4 particles, 64.82 g of polymer F-4 was obtained.
In the same manner as in Ex. 1, a membrane-form polymer H-4 was obtained.

(Ex. 5)

In the same manner as in Ex. 1 except that into a stainless steel autoclave having an internal capacity of 2,575 mL, 2,783.2 g of BSVE-2E was charged, the temperature of the reactor was 10°C, TFE was introduced up to 0.12 MPaG, 9.33 g of a PFB solution diluted with AK225G so that the PFB concentration would be 3 mass% was used, addition line was washed with 8.46 g of AK225G, and the autoclave was cooled after 14.5 hours from the initiation of polymerization to terminate the polymerization reaction, a solution of polymer F-5 was obtained.
In the same manner as in Ex. 1 except that to the solution of polymer F-5, 1,500 g of AK-141b and 300 g of methanol were added and mixed, and further 2,500 g of AK-141b at room temperature was added, to agglomerate the polymer F-5 thereby to form particles, polymer F-5 particles were obtained. In the same manner as in Ex. 4 except that 1,000 g of AK-141b was added to the obtained polymer F-5 particles, 36.8 g of polymer F-5 was obtained.
In the same manner as in Ex. 1, a membrane-form polymer H-5 was obtained.

(Ex. 6)

In the same manner as in Ex. 1 except that into a stainless steel autoclave having an internal capacity of 2,575 mL, 1,615.7 g of BSVE-2E was charged and TFE was introduced up to 0.52 MPaG, 3.19 g of an AK225G solution having 325 mg of IPP dissolved was used, addition line was washed with 5.00 g of AK225, and the autoclave was cooled after 6 hours from the initiation of polymerization to terminate the polymerization reaction, a solution of polymer F-6 was obtained.
At room temperature, the solution of polymer F-6 was added to 5,000 g of AE3000 at 5°C to agglomerate the polymer F-6, and in the same manner as in Ex. 1, polymer F-6 particles were obtained. In the same manner as in Ex. 4 except that 800 g of AE3000 was added to the obtained polymer F-6 particles, 135.7 g of polymer F-6 was obtained.
In the same manner as in Ex. 1, a membrane-form polymer H-6 was obtained.

(Ex. 7)

In the same manner as in Ex. 1 except that into a stainless steel autoclave having an internal capacity of 2,575 mL, 3,700.0 g of BSVE-2E was charged, TFE was introduced up to 0.04 MPaG, a 12.34 g of a PFB solution diluted with AK225G so that the PFB concentration would be 3 mass% was used, addition line was washed with 11.57 g of AK225G, and the autoclave was cooled after 24 hours from the initiation of polymerization to terminate the polymerization reaction, a solution of polymer F-7 was obtained.
In the same manner as in Ex. 1 except that 2,000 g of AK-141 b and 450 g of methanol were added to the solution of polymer F-7 and mixed, and further 3,500 g of AK-141b was added to agglomerate the polymer F-7 thereby to form particles, polymer F-7 particles were obtained. In the same manner as in Ex. 2 except that 500 g of AE3000 was added to the obtained polymer F-7 particles, 47.3 g of polymer F-7 was obtained.
The same treatment as in Ex. 1 was conducted to convert $-SO_2F$ groups of the polymer F-7 into $-SO_3K$ groups and further into sulfonic acid groups. The polymer was dissolved upon conversion of the $-SO_3K$ groups into sulfonic acid groups, and a membrane-form polymer H-7 was not obtained.

(Ex. 8)

In the same manner as in Ex. 2 except that into a stainless steel autoclave having an internal capacity of 125 mL, 90.03 g of S-PSVE was charged instead of BSVE-2E, the temperature of the autoclave was 24°C, TFE was introduced up to 0.2 MPaG, 0.90 g of a PFB solution diluted with AK225G so that the PFB concentration would be 3 mass% was used, addition line was washed with 1 g of AK225G, and the autoclave was cooled after 22.5 hours from the initiation of polymerization to terminate the polymerization reaction, a solution of polymer F-8 was obtained.
In the same manner as in Ex. 1 except that at room temperature, the solution of polymer F-8 was added to 300 g of AK-141 b at 10°C to agglomerate the polymer F-8 thereby to form particles, polymer F-8 particles were obtained. In the same manner as in Ex. 2 except that 200 g of AK-141 b was added to the obtained polymer F-8 particles, 6.1 g of polymer F-8 was obtained.
In the same manner as in Ex. 1, a membrane-form polymer H-8 was obtained.

[Table 1]

| | | | Ex. 1 | Ex. 2 | Ex. 3 | Ex. 4 | Ex. 5 | Ex. 6 |
|---|---|---|---|---|---|---|---|---|
| Type of precursor | | | F-1 | F-2 | F-3 | F-4 | F-5 | F-6 |
| Type of electrolyte material | | | H-1 | H-2 | H-3 | H-4 | H-5 | H-6 |
| Structural units | BSVE-2E | mol% | 20.0 | 23.5 | 23.7 | 19.5 | 27.3 | 21.3 |
| | S-PSVE | mol% | - | - | - | - | - | - |
| | TFE | mol% | 80.0 | 76.5 | 76.3 | 80.5 | 72.7 | 78.7 |
| TQ | | °C | 236 | 252 | 229 | 296 | 248 | 270 |
| AR | | meq/g | 1.95 | 2.10 | 2.11 | 1.93 | 2.24 | 2.01 |
| EW | | g/eq | 513 | 476 | 474 | 519 | 446 | 498 |
| Proton conductivity | | S/cm | 0.169 | 0.184 | 0.202 | 0.166 | 0.203 | 0.175 |
| Hot water resistance | | mass% | 8 | 9 | 11 | 5 | 13 | 7 |

[Table 2]

| | | | Ex. 7 | Ex. 8 |
|---|---|---|---|---|
| Type of precursor | | | F-7 | F-8 |
| Type of electrolyte material | | | H-7 | H-8 |
| Structural units | BSVE-2E | mol% | 40.1 | - |
| | S-PSVE | mol% | - | 32.9 |
| | TFE | mol% | 59.9 | 67.1 |
| TQ | | °C | 154 | 231 |
| AR | | meq/g | 2.58 | 2.07 |
| EW | | g/eq | 388 | 484 |
| Proton conductivity | | S/cm | Not measurable | 0.16 |
| Hot water resistance | | mass% | | 33 |

Each of the polymers F-1 to F-6 in Ex. 1 to 6 had units u1, and each of the polymers H-1 to H-6 obtained from these polymers had EW of from 400 to 550 g/eq. Accordingly, they had favorable proton conductivity and had favorable hot water resistance.

In Ex. 7, the polymer F-7 was dissolved when the $-SO_2F$ groups of the polymer F-7 were hydrolyzed, whereby a membrane-form polymer H-7 was not obtained. EW of the polymer H-7 was less than 400 g/eq.

The polymer F-8 in Ex. 8 had units u2 and no units u1. In the polymer F-8, the proportion of the units u2 was increased so that the proton conductivity would be at least 0.15 S/cm. The obtained membrane-form polymer H-7 was inferior in hot water resistance.

The electrolyte material of the present invention is useful as a polymer electrolyte membrane in the membrane/electrode assembly for a polymer electrolyte fuel cell, etc.

REFERENCE SYMBOLS

- 10: Membrane/electrode assembly
- 11: Catalyst layer
- 12: Gas diffusion layer
- 13: Anode

14: Cathode
15: Polymer electrolyte membrane
16: Carbon layer

## Claims

1. An electrolyte material which is formed of a polymer H having units represented by the following formula u1 and units based on tetrafluoroethylene,
wherein the proportion of the units u1 in the polymer H is from 18.1 to 29.9 mol% to all the units contained in the polymer H,
wherein the polymer H has EW represented by the following formula I of from 400 to 550 g/eq, and
the mass reduction ratio when immersed in hot water at 120°C for 24 hours is at most 15 mass%:

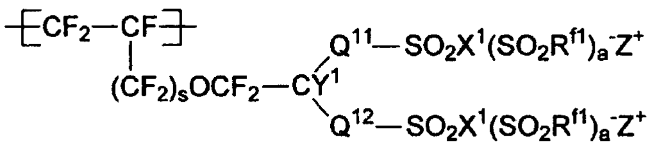

(u1)

wherein

$Q^{11}$ is a perfluoroalkylene group which may have an etheric oxygen atom,
$Q^{12}$ is a single bond or a perfluoroalkylene group which may have an etheric oxygen atom,
$Y^1$ is a fluorine atom or a monovalent perfluoroorganic group,
s is 0 or 1,
$R^{f1}$ is a perfluoroalkyl group which may have an etheric oxygen atom,
$X^1$ is an oxygen atom, a nitrogen atom or a carbon atom,
a is 0 when $X^1$ is an oxygen atom, 1 when $X^1$ is a nitrogen atom, and 2 when $X^1$ is a carbon atom, and
$Z^+$ is $H^+$, a monovalent metal ion or an ammonium ion in which at least one hydrogen atom may be substituted with a hydrocarbon group;

$$EW=1000/AR \quad (I)$$

wherein EW is the equivalent weight (number of g of the polymer per 1 equivalent amount of ion exchange groups), and AR is the ion exchange capacity (milliequivalent of ion exchange groups per 1 g of the polymer).

2. The electrolyte material according to Claim 1, wherein the proton conductivity at a temperature of 80°C under a relative humidity of 50%RH is at least 0.15 S/cm.

3. The electrolyte material according to Claim 1 or 2, wherein $Q^{11}$ is a perfluoroalkylene group having an etheric oxygen atom, and $Q^{12}$ is a perfluoroalkylene group having an etheric oxygen atom.

4. The electrolyte material according to any one of Claims 1 to 3, wherein the polymer H has no unit having only one ion exchange group.

5. A liquid composition comprising the electrolyte material as defined in any one of Claims 1 to 4, and a dispersion medium.

6. A polymer electrolyte membrane comprising the electrolyte material as defined in any one of Claims 1 to 4.

7. A membrane/electrode assembly, comprising an anode having a catalyst layer, a cathode having a catalyst layer, and the polymer electrolyte membrane as defined in Claim 6 disposed between the anode and the cathode.

8. A polymer electrolyte fuel cell, comprising the membrane/electrode assembly as defined in Claim 7.

9. A precursor of the electrolyte material as defined in any one of Claims 1 to 4, which is formed of a polymer F having

units represented by the following formula u'1 and units based on tetrafluoroethylene:

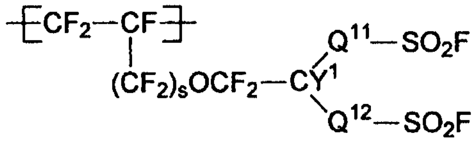

(u'1)

wherein $Q^{11}$, $Q^{12}$, $Y^1$ and s correspond to $Q^{11}$, $Q^{12}$, $Y^1$ and s as defined in any one of Claims 1 to 4.

**10.** The precursor according to Claim 9, wherein the polymer F has the following TQ of from 220 to 300°C:
TQ: a temperature at which the extrusion amount becomes 100 $mm^3$/sec, when the polymer F is melted and the molten polymer F is extruded from a nozzle having a length of 1 mm and an inner diameter of 1 mm, under 2.94 MPa.

**11.** A method for producing the precursor as defined in Claim 9 or 10, which comprises polymerizing a monomer component containing a compound represented by the following formula m1 and tetrafluoroethylene by solution polymerization method to obtain the polymer F:

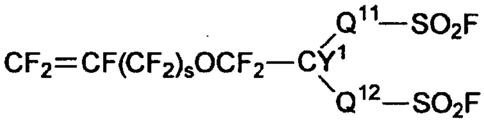

(m1)

wherein $Q^{11}$, $Q^{12}$, $Y^1$ and s correspond to $Q^{11}$, $Q^{12}$, $Y^1$ and s as defined in Claim 9 or 10.

**12.** A method for producing the electrolyte material as defined in any one of Claims 1 to 4, which comprises obtaining the polymer F by the method as defined in Claim 11, and converting -$SO_2$F groups of the obtained polymer F into ion exchange groups to obtain the polymer H.

## Patentansprüche

**1.** Elektrolytmaterial, welches aus einem Polymer H mit Einheiten, dargestellt durch die nachstehende Formel u1, und Einheiten auf Basis von Tetrafluorethylen gebildet ist,
wobei der Anteil der Einheiten u1 in dem Polymer H von 18,1 bis 29,9 mol% in Bezug auf alle Einheiten, enthalten in dem Polymer H, beträgt,
wobei das Polymer H ein EW, dargestellt durch die nachstehende Formel I, von 400 bis 550 g/eq aufweist, und das Massenreduktionsverhältnis, wenn es in heißem Wasser bei 120°C für 24 Stunden eingetaucht wird, höchstens 15 Massen-% beträgt:

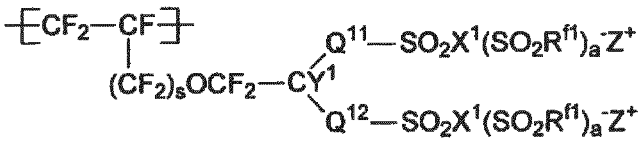

(u1)

wobei $Q^{11}$ eine Perfluoralkylengruppe, welche ein etherisches Sauerstoffatom aufweisen kann, ist,
$Q^{12}$ eine Einfachbindung oder eine Perfluoralkylengruppe, welche ein etherisches Sauerstoffatom aufweisen kann, ist,
$Y^1$ ein Fluoratom oder eine einwertige perfluororganische Gruppe ist,
s 0 oder 1 ist,
$R^{f1}$ eine Perfluoralkylgruppe, welche ein etherisches Sauerstoffatom aufweisen kann, ist,
$X^1$ ein Sauerstoffatom, ein Stickstoffatom oder ein Kohlenstoffatom ist,
a 0, wenn $X^1$ ein Sauerstoffatom ist, 1, wenn $X^1$ ein Stickstoffatom ist, und 2, wenn $X^1$ ein Kohlenstoffatom ist, ist, und
$Z^+$ $H^+$, ein einwertiges Metallion oder ein Ammoniumion, in welchem mindestens ein Wasserstoffatom mit einer Kohlenwasserstoffgruppe substituiert sein kann, ist;

$$EW=1000/AR \quad (I)$$

wobei EW das Äquivalentgewicht (Anzahl von g des Polymers pro 1 Äquivalentmenge von Ionenaustauschgruppen) ist, und AR die Ionenaustauschkapazität (Milliäquivalent von Ionenaustauschgruppen pro 1 g des Polymers) ist.

2. Elektrolytmaterial nach Anspruch 1, wobei die Protonenleitfähigkeit bei einer Temperatur von 80°C unter einer relativen Luftfeuchtigkeit von 50%RH mindestens 0,15 S/cm beträgt.

3. Elektrolytmaterial nach Anspruch 1 oder 2, wobei $Q^{11}$ eine Perfluoralkylengruppe mit einem etherischen Sauerstoffatom ist, und $Q^{12}$ eine Perfluoralkylengruppe mit einem etherischen Sauerstoffatom ist.

4. Elektrolytmaterial nach einem der Ansprüche 1 bis 3, wobei das Polymer H keine Einheit mit nur einer Ionenaustauschgruppe aufweist.

5. Flüssigzusammensetzung, umfassend das Elektrolytmaterial nach einem der Ansprüche 1 bis 4 und ein Dispersionsmedium.

6. Polymerelektrolytmembran, umfassend das Elektrolytmaterial nach einem der Ansprüche 1 bis 4.

7. Membran-/Elektrodenanordnung, umfassend eine Anode mit einer Katalysatorschicht, eine Kathode mit einer Katalysatorschicht, und die Polymerelektrolytmembran nach Anspruch 6, angeordnet zwischen der Anode und der Kathode.

8. Polymerelektrolytbrennstoffzelle, umfassend die Membran-/Elektrodenanordnung nach Anspruch 7.

9. Präkursor des Elektrolytmaterials nach einem der Ansprüche 1 bis 4, welcher aus einem Polymer F mit Einheiten, dargestellt durch die nachstehende Formel u'1, und Einheiten auf Basis von Tetrafluorethylen gebildet ist:

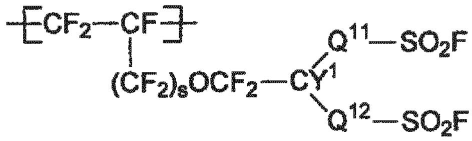

(u'1)

wobei $Q^{11}$, $Q^{12}$, $Y^1$ und s $Q^{11}$, $Q^{12}$, $Y^1$ und s, wie in einem der Ansprüche 1 bis 4 definiert, entsprechen.

10. Präkursor nach Anspruch 9, wobei das Polymer F die nachstehende TQ von 220 bis 300°C aufweist:
TQ: eine Temperatur, bei welcher die Extrusionsmenge 100 $mm^3$/sec wird, wenn das Polymer F geschmolzen ist und das geschmolzene Polymer F aus einer Düse mit einer Länge von 1 mm und einem Innendurchmesser von 1 mm unter 2,94 MPa extrudiert wird.

11. Verfahren zur Herstellung des Präkursors nach Anspruch 9 oder 10, welches das Polymerisieren einer Monomerkomponente, enthaltend eine Verbindung, dargestellt durch die nachstehende Formel m1, und Tetrafluorethylen, durch ein Lösungspolymerisationsverfahren, um das Polymer F zu erhalten, umfasst:

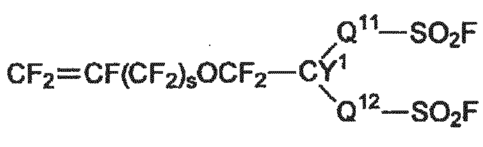

(m1)

wobei $Q^{11}$, $Q^{12}$, $Y^1$ und s $Q^{11}$, $Q^{12}$, $Y^1$ und s, wie in Anspruch 9 oder 10 definiert, entsprechen.

12. Verfahren zur Herstellung des Elektrolytmaterials nach einem der Ansprüche 1 bis 4, welches das Erhalten des Polymers F durch das Verfahren nach Anspruch 11, und das Umwandeln von $-SO_2F$-Gruppen des erhaltenen Polymers F in Ionenaustauschgruppen, um das Polymer H zu erhalten, umfasst.

## Revendications

**1.** Matériau d'électrolyte qui est constitué d'un polymère H ayant des motifs représentés par la formule u1 suivante et des motifs basés sur du tétrafluoroéthylène,
dans lequel la proportion des motifs u1 dans le polymère H est de 18,1 à 29,9 % mol de tous les motifs contenus dans le polymère H,
dans lequel le polymère H a un EW représenté par la formule I suivante de 400 à 550 g/éq, et
le rapport de réduction de masse en immersion dans l'eau bouillante à 120 °C pendant 24 heures est d'au plus 15 % massiques :

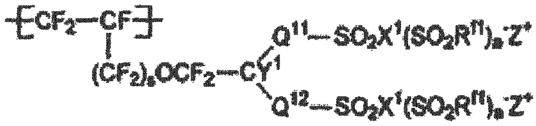

(u1)

où

$Q^{11}$ est un groupe perfluoroalkylène qui peut avoir un atome d'oxygène d'éther,
$Q^{12}$ est une liaison simple ou un groupe perfluoroalkylène qui peut avoir un atome d'oxygène d'éther,
$Y^1$ est un atome de fluor ou un groupe perfluoro-organique monovalent,
s est égal à 0 ou 1,
$R^{f1}$ est un groupe perfluoroalkyle qui peut avoir un atome d'oxygène d'éther,
$X^1$ est un atome d'oxygène, un atome d'azote ou un atome de carbone,
a est égal à 0 lorsque $X^1$ est un atome d'oxygène, à 1 lorsque $X^1$ est un atome d'azote et à 2 lorsque $X^1$ est un atome de carbone, et
$Z^+$ est $H^+$, un ion métallique monovalent ou un ion ammonium dans lequel au moins un atome d'hydrogène peut être substitué par un groupe hydrocarboné ;

$$EW = 1000/AR \qquad (I)$$

où EW est le poids équivalent (nombre de g de polymère pour 1 quantité équivalente de groupes échangeurs d'ions) et AR est la capacité d'échange d'ions (milliéquivalent de groupes échangeurs d'ions pour 1 g de polymère).

**2.** Matériau d'électrolyte selon la revendication 1, dans lequel la conductivité protonique à une température de 80 °C sous une humidité relative de 50 % HR est d'au moins 0,15 S/cm.

**3.** Matériau d'électrolyte selon la revendication 1 ou 2, dans lequel $Q^{11}$ est un groupe perfluoroalkylène ayant un atome d'oxygène d'éther, et $Q^{12}$ est un groupe perfluoroalkylène ayant un atome d'oxygène d'éther.

**4.** Matériau d'électrolyte selon l'une quelconque des revendications 1 à 3, dans lequel le polymère H n'a pas de motif ayant seulement un groupe échangeur d'ions.

**5.** Composition liquide comprenant le matériau d'électrolyte tel que défini dans l'une quelconque des revendications 1 à 4, et un milieu de dispersion.

**6.** Membrane électrolyte polymère comprenant le matériau d'électrolyte tel que défini dans l'une quelconque des revendications 1 à 4.

**7.** Ensemble membrane/électrode comprenant une anode ayant une couche catalytique, une cathode ayant une couche catalytique, et la membrane électrolyte polymère telle que définie dans la revendication 6 disposée entre l'anode et la cathode.

**8.** Pile à combustible à électrolyte polymère comprenant l'ensemble membrane/électrode tel que défini dans la revendication 7.

**9.** Précurseur du matériau d'électrolyte tel que défini dans l'une quelconque des revendications 1 à 4, qui est constitué d'un polymère F ayant des motifs représentés par la formule u'1 suivante et des motifs basés sur du tétrafluoroéthylène :

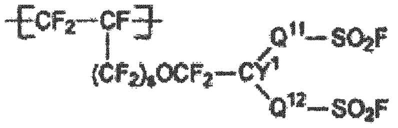

(u'1)

où $Q^{11}$, $Q^{12}$, $Y^1$ et s correspondent à $Q^{11}$, $Q^{12}$, $Y^1$ et s tels que définis dans l'une quelconque des revendications 1 à 4.

**10.** Précurseur selon la revendication 9, dans lequel le polymère F présente la TQ suivante allant de 220 à 300 °C :
TQ : température à laquelle la quantité d'extrusion passe à 100 $mm^3/s$, lorsque le polymère F est fondu et que le polymère F fondu est extrudé à partir d'une buse ayant une longueur de 1 mm et un diamètre intérieur de 1 mm, à 2,94 MPa.

**11.** Procédé de production du précurseur tel que défini dans la revendication 9 ou 10, qui comprend la polymérisation d'un composant monomère contenant un composé représenté par la formule m1 suivante et du tétrafluoroéthylène par un procédé de polymérisation en solution afin d'obtenir le polymère F :

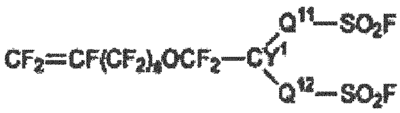

(m1)

où $Q^{11}$, $Q^{12}$, $Y^1$ et s correspondent à $Q^{11}$, $Q^{12}$, $Y^1$ et s tels que définis dans la revendication 9 ou 10.

**12.** Procédé de production du matériau d'électrolyte tel que défini dans l'une quelconque des revendications 1 à 4, qui comprend l'obtention du polymère F par le procédé tel que défini dans la revendication 11, et la conversion des groupes $-SO_2F$ du polymère F obtenu en groupes échangeurs d'ions afin d'obtenir le polymère H.

Fig. 1

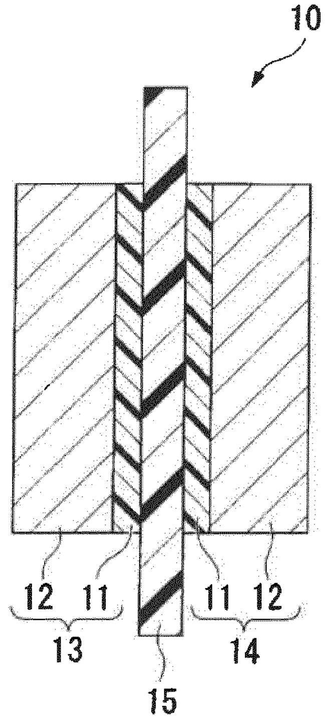


Fig. 2

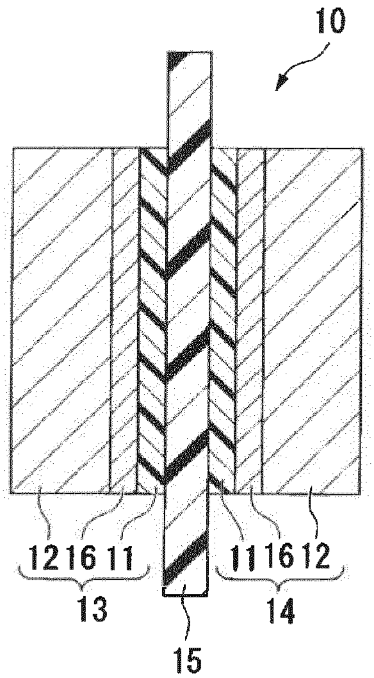

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5474762 B
- JP 4067315 B
- US 2008138685 A1
- US 2010009236 A1
- WO 2011013578 A
- WO 2007013533 A
- JP H0435226 B
- JP 2001504872 A
- JP 2005082749 A
- WO 200638928 A
- JP 2004519296 A